# FASCICULE DE BREVET EUROPEEN

(11) **EP 2 408 938 B1**
(45) Date de publication et mention de la délivrance du brevet: **05.07.2017**
(21) Numéro de dépôt: 09785843.5
(22) Date de dépôt: 17.03.2009
(51) Int. Cl.: C21B 5/06

(54) **PROCÉDÉ DE RECYCLAGE DE GAZ DE HAUT FOURNEAU ET DISPOSITIF ASSOCIÉ**
VERFAHREN ZUM REZIRKULIEREN VON HOCHOFENGAS UND ZUGEHÖRIGE VORRICHTUNG
METHOD FOR RECIRCULATING BLAST FURNACE GAS, AND ASSOCIATED DEVICE

(43) Date de publication de la demande: 25.01.2012
(73) Titulaire: ArcelorMittal, 1160 Luxembourg (LU)
(72) Inventeur: DIDELON, Fernand, F-57050 Longeville-lès-Metz (FR); RACHENNE, Yves, F-57070 Vantoux (FR); GILLION, Christian, F-59800 Lille (FR); BORLEE, Jean, B-4122 Neupre (BE); SERT, Dominique, F-57645 Montoy-Flanville (FR)
(74) Mandataire: Lavoix
(86) Numéro de dépôt international: PCT/IB2009/000535
(87) Numéro de publication internationale: WO 2010/106387

(56) Documents cités:
- DE-A1- 2 261 766
- DE-A1-102005 017 434
- DE-C- 748 380
- DE-C1- 3 702 875
- FR-A- 2 049 293
- DANLOY G ET AL: "ULCOS - Pilot testing of the low-CO2 blast furnace process at the experimental BF in Luleaa" REVUE DE METALLURGIE - CAHIERS D'INFORMATIONS TECHNIQUES, REVUE DE METALLURGIE. PARIS, FR, vol. 106, no. 1, 1 janvier 2009 (2009-01-01), pages 1-8, XP001521800 ISSN: 0035-1563
- BENDER W ET AL: "Resource efficiency in the steel industry in Germany - status 2008 Part 1: Potentials in steel production" STAHL UND EISEN, VERLAG STAHLEISEN, DUSSELDORF, DE, vol. 128, no. 11, 12 novembre 2008 (2008-11-12), pages S125-S126,S128, XP001519743 ISSN: 0340-4803
- SCHEIDIG K ET AL: "UEBERLEGUNGEN ZUM HOCHOFENBETRIEB MIT SYNTHETISCHEM KALTWIND//REFLECTIONS ON BLAST FURNACE OPERATION WITH SYNTHETIC COLD BLAST" STAHL UND EISEN, VERLAG STAHLEISEN, DUSSELDORF, DE, vol. 122, no. 12, 15 avril 2003 (2003-04-15), pages 55-60, XP001145209 ISSN: 0340-4803

## Description

L'invention concerne un procédé de recyclage de gaz de haut fourneau dans lequel au moins une partie des gaz issus du haut fourneau subissent une étape d'épuration de CO₂ de façon à créer un gaz riche en CO qui est réinjecté dans le haut fourneau. L'invention concerne en outre un dispositif mettant en oeuvre ce procédé.

Le haut-fourneau est un réacteur chimique à contre courant gaz-liquides-solides dont la finalité principale est la production de fonte, ultérieurement convertie en acier par réduction de sa teneur en carbone.

Le haut fourneau est alimenté en matières solides, principalement en aggloméré, boulettes, minerai de fer et en coke, au niveau de sa partie supérieure. Les liquides constitués de fonte et de laitier sont évacués au niveau du creuset dans sa partie inférieure.

La transformation de la charge ferrifère (aggloméré, boulettes et minerai de fer) en fonte s'effectue de façon traditionnelle par réduction des oxydes de fer par un gaz réducteur (contenant notamment CO, H₂ et N₂), qui se forme par combustion du coke au niveau des tuyères situées dans la partie basse du haut fourneau où de l'air préchauffé à une température comprise entre 1000 et 1300°C appelé vent chaud est injecté.

Pour accroître la productivité et réduire les coûts, on injecte également des combustibles auxiliaires aux tuyères tels que du charbon sous forme pulvérisée, du fuel-oil, du gaz naturel ou d'autres combustibles, associés à de l'oxygène qui vient enrichir le vent chaud.

Les gaz récupérés au niveau de la partie supérieure du haut fourneau appelés gaz de gueulard sont principalement constitués de CO, CO₂, H₂ et N₂ dans des proportions respectives d'environ 22%, 22%, 3% et 53%. Ces gaz sont généralement utilisés dans d'autres parties de l'usine comme combustible. Les haut-fourneaux sont donc des producteurs importants de CO₂.

Or, devant l'augmentation considérable de la concentration du CO₂ dans l'atmosphère depuis le début du siècle dernier, il est essentiel de réduire les émissions du CO₂ là ou il est produit en grande quantité, et donc notamment aux haut fourneaux.

Dans ce sens, durant les 50 dernières années, la consommation des agents réducteurs au haut-fourneau a été réduite de moitié de sorte qu'à présent, dans les haut-fourneaux de configuration traditionnelle, la consommation de carbone a atteint une limite basse liée aux lois de la thermodynamique.

Une voie connue de réduction supplémentaire des émissions de CO₂ est la réintroduction dans le haut fourneau des gaz de gueulard épurés en CO₂ et riches en CO. L'utilisation du gaz riche en CO comme agent réducteur permet ainsi de diminuer la consommation en coke et donc les émissions de CO₂.

Dans une configuration préférée, la réintroduction du CO est effectuée à deux niveaux, d'une part au niveau des tuyères à une température d'environ 1200°C, plus largement comprise entre 1000 et 1300 °C et d'autre part au niveau de la cuve, à proximité de l'angle cuve-ventre du haut-fourneau, à une température d'environ 900°C, plus largement comprise entre 1000 et 1300°C.

Une telle configuration est notamment décrite dans la publication Danloy G et al "ULCOS - Pilot testing of the low-CO2 blast furnace process at the experimenta/ BF in Luleaa", Revue de métallurgie - Cahiers d'informations techniques, Revue de métallurgie, Paris, Vol 106, No1, 1 janvier 2009, dans la publication Bender W et al. "Resource efficiency in the steel industry in Germany - status 2008 Part 1: Potentials in steel production", Stahl und eisen, verlag stahleisen, Dusseldorf, Vol 128, No 11 12 novembre 2008, et pour partie dans la publication de brevet DE3702875.

On citera également la publication de brevet FR2049293 qui prévoit la réintroduction des gaz de gueulard exclusivement au niveau de la cuve, lesquels gaz sont éventuellement refroidis par mélange avec des gaz de gueulard non chauffés. Dans ce dispositif, les gaz de gueulard ne sont pas épurés en CO2.

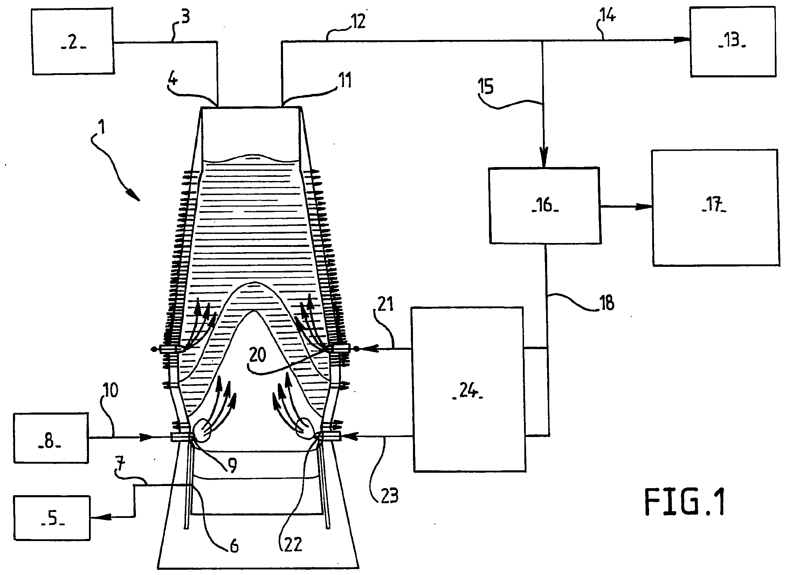

On décrit ce système connu en référence à la figure 1.

Le haut fourneau 1 est alimenté en coke, en aggloméré, en boulettes, et en minerai de fer 2 par la ligne 3 au point 4. La fonte et le laitier 5 sont récupérés au point 6 au niveau du creuset par la ligne 7. L'oxygène et le charbon et/ou d'autres agents réducteurs auxiliaires 8 sont introduits au point 9 au niveau des tuyères par la ligne 10.

Les gaz de gueulard sont récupérés au point 11 de la partie supérieure du haut fourneau par l'intermédiaire de la ligne 12. Une partie de ces gaz de gueulard est exportée 13 via la canalisation 14 dans un autre dispositif du site. L'autre partie des gaz de gueulard est recyclée dans le haut fourneau par l'intermédiaire de la canalisation 15.

Cette partie des gaz de gueulard destinée à être recyclée est épurée de la majeure partie son CO₂ par l'intermédiaire d'un épurateur de CO₂. Cet épurateur 16 peut-être par exemple consister en un procédé d'absorption physico-chimique utilisant une solution d'amines, ou un procédé d'adsorption modulée en pression dénommé PSA (Pressure Swing Adsorption), ou un procédé d'adsorption avec régénération sous vide dénommé VPSA (Vacuum Pressure Swing Absorption), ces procédés pouvant être ou non associés à une étape supplémentaire de cryogénie destinée à produire du CO₂ pur 17 prêt à être stocké dans les sous sols (on parle alors de stockage géologique) ou à être utilisé dans des applications spécifiques comme l'industrie alimentaire ou la récupération assistée d'hydrocarbures dans des gisements en fin d'exploitation..

Le gaz riche en CO 18 est ensuite chauffé dans des échangeurs thermiques 24, communément appelés 'cowpers', puis introduit dans le haut fourneau 1 à une température comprise entre 700 et 1000°C au point 20 d'une ligne d'injection haute 21, et à une température comprise entre 1000°C et 1300°C au point 22 d'une ligne d'injection basse 23.

Le débit spécifique de gaz riche en CO requis pour la ligne d'injection haute 21 est compris entre 300 et 600 Nm³ par tonne de fonte et pour la ligne d'injection basse 23, il est compris entre 200 et 500 Nm³ par tonne de fonte.

La difficulté de cette configuration est de contrôler ces débits. En effet, le gaz riche en CO qui circule dans les lignes d'injection basse 23 et haute 21 est à une température supérieure à 700°C pour la ligne d'injection haute et supérieure à 1000°C pour la ligne d'injection basse, et il n'est donc pas possible d'utiliser des vannes de régulation classiques puisque ces dernières ne résistent pas à de telles températures, en particulier sur des lignes de circulation de gaz réducteur.

L'invention permet de pallier ce problème en proposant un procédé et un dispositif associé permettant d'assurer l'injection de gaz riche en CO dans le haut fourneau au niveau des lignes d'injection basse et haute aux températures et aux débits requis, tout en assurant la sécurité du dispositif notamment si l'un des échangeurs thermiques est hors d'état de fonctionner.

A cet effet, l'invention a pour objet principal un procédé de recyclage de gaz de haut-fourneau dans lequel au moins une partie des gaz issus du haut fourneau subissent une étape d'épuration de CO₂ de façon à créer un gaz riche en CO qui est réinjecté en un premier point d'injection haut situé au dessus de la base du haut-fourneau à une température comprise entre 700 et 1000°C au niveau d'une ligne d'injection haute, et en un deuxième point d'injection bas à la base du haut fourneau à une température comprise entre 1000°C et 1300 °C au niveau d'une ligne d'injection basse, dans lequel les gaz des lignes d'injection basse et haute sont chauffés au moyen de réchauffeurs desquels les gaz sortent à une température comprise entre 1000°C et 1300°C. Ce procédé est caractérisé en ce qu'une partie du gaz riche en CO en sortie de l'étape d'épuration est directement introduite dans la ligne d'injection haute via une ligne d'injection en gaz froid (35) pour obtenir une température comprise entre 700 et 1000°C au premier point d'injection haut, et en ce que la régulation des débits de gaz au niveau des points d'injection bas et haut s'effectue en amont du système de réchauffeurs.

Le procédé de l'invention peut également comporter les caractéristiques optionnelles suivantes prises isolément ou en combinaison :
- on mesure la température au niveau de la ligne d'injection haute et on ajuste le débit de gaz froid à introduire dans cette ligne d'injection haute selon la température mesurée précédemment.
- les gaz des lignes d'injection haute et basse sont chauffés par deux systèmes de réchauffeurs indépendants, on effectue des mesures de débits de gaz permettant d'évaluer les débits de gaz au niveau des points respectifs d'injection bas et haut, et on ajuste les débits de gaz à introduire respectivement dans les premier et deuxième systèmes de réchauffeurs selon les débits de gaz évalués précédemment.
- on mesure le débit de gaz circulant sur la ligne principale de transport du gaz épuré en CO₂ avant la ligne d'injection de gaz froid et le débit de gaz à l'entrée du système de réchauffeurs de la ligne d'injection basse, et on ajuste les débits de gaz à introduire respectivement dans les premier et deuxième systèmes de réchauffeurs pour obtenir les débits de gaz visés au niveau des points respectifs d'injection bas et haut.
- la régulation des débits de gaz à introduire dans les premier et deuxième systèmes de réchauffeurs s'effectue d'une part en ajustant le débit de gaz sur la ligne principale de transport du gaz épuré en CO₂ avant la ligne d'injection de gaz froid en agissant soit directement sur le débit de gaz de cette ligne, soit sur un compresseur situé en amont de l'épurateur de CO₂ 16 dans lequel passe le gaz ou soit sur une turbine de détente éventuellement comprise dans l'épurateur de CO₂, et d'autre part en ajustant le débit de gaz à l'entrée du système de réchauffeurs de la ligne d'injection basse.
- on bascule d'une configuration dans laquelle les gaz des lignes d'injection haute et basse sont chauffés par les deux systèmes de réchauffeurs indépendants à une configuration dans laquelle les gaz des lignes d'injection haute et basse sont chauffés par un unique système de réchauffeur.
- dans la configuration à un système de réchauffeurs, on mesure le débit de gaz circulant sur la ligne principale de transport du gaz épuré en CO2 (18) avant la ligne d'injection de gaz froid et on ajuste le débit de gaz à introduire dans l'unique système de réchauffeur.
- dans cette configuration, on mesure le débit de gaz qui circule dans l'une ou l'autre ou les deux lignes d'injection basse et haute de façon à évaluer le débit de gaz au niveau des points d'injection bas et/ou haut et les gaz de l'une ou l'autre ou des deux lignes d'injection basse et haute passent dans un système de pertes de charges singulières de façon à agir, même sensiblement, sur les débits de gaz des points d'injection bas et/ou haut.
- la température des gaz de la ligne d'injection basse au niveau du point d'injection dans la partie basse du haut fourneau est d'environ 1200°C, et la température des gaz de la ligne d'injection haute au niveau du point d'injection à proximité de l'angle cuve-ventre du haut fourneau est d'environ 900°C.

L'invention concerne également un dispositif de recyclage de gaz de haut fourneau comportant :
- un épurateur de CO₂ dans lequel circule au moins une partie des gaz issus du haut fourneau de façon à créer un gaz riche en CO,
- une ligne d'injection haute par laquelle du gaz riche en CO issu de l'épurateur est injecté en un premier point d'injection haut au dessus de la base du haut fourneau à une température comprise entre 700 et 1000°C,
- une ligne d'injection basse par laquelle du gaz riche en CO issu de l'épurateur est injecté en un deuxième point d'injection bas dans la partie basse du haut fourneau à une température comprise entre 1000 et 1300°C,
- deux systèmes de réchauffeurs permettant de chauffer respectivement le gaz des lignes d'injection haute et basse,
- une ligne d'alimentation en gaz froid de la ligne d'injection haute par laquelle une partie du gaz riche en CO en sortie de l'épurateur est introduite dans la ligne d'injection haute au niveau d'un point d'injection en gaz froid pour l'obtention d'une température comprise entre 700 et 1000 °C au point d'injection haut du haut-fourneau, et
- un système de régulation des débits de gaz au niveau des points respectifs d'injection bas et haut qui est situé en amont des systèmes de réchauffeurs.

Le dispositif de l'invention peut également comprendre les caractéristiques optionnelles suivantes prises isolément ou en combinaison :
- le dispositif comporte
   - au moins un système de mesure de la température du gaz sur la ligne d'injection haute, et
   - au moins un système permettant d'ajuster le débit de gaz froid à injecter dans la ligne d'injection haute selon la température du gaz de cette ligne d'injection haute.
      - le système de régulation des débits de gaz au niveau des points respectifs d'injection bas et haut comporte :
         - au moins un système de mesure de débit de gaz permettant d'évaluer les débits de gaz des lignes d'injection basse et haute au niveau des points d'injection bas et haut
         - un système permettant d'ajuster les débits de gaz à l'entrée de chacun des systèmes de réchauffeurs selon les débits de gaz évalués des lignes d'injection basse et haute.
      - le dispositif comprend :
         - un système de mesure du débit de gaz au niveau de la ligne principale de transport du gaz épuré en CO₂ avant la ligne d'injection de gaz froid,
         - un système de mesure du débit de gaz à l'entrée du système de réchauffeurs de la ligne d'injection basse,
         - un système permettant d'ajuster le débit de gaz au niveau de la ligne principale de transport du gaz épuré en CO₂ avant la ligne d'injection de gaz froid, et
         - un système permettant d'ajuster le débit de gaz à l'entrée du système de réchauffeurs de la ligne d'injection basse
            - le système permettant d'ajuster le débit de gaz au niveau de la ligne principale de transport du gaz épuré en CO₂ avant la ligne d'injection de gaz froid est soit une vanne de régulation, soit un compresseur situé en amont de l'épurateur de CO₂ dans lequel passe le gaz ou soit sur une turbine de détente éventuellement comprise dans l'épurateur de CO₂
               --- les systèmes de réchauffeurs sont des échangeurs thermiques comportant chacun un système de chauffage du gaz et un système d'accumulation de chaleur, chacun de ces échangeurs pouvant basculer de la fonction d'accumulateur de chaleur à la fonction de chauffage de gaz et réciproquement, de façon à maintenir la température du gaz en sortie du système de réchauffeurs relativement stable à une température comprise entre 1000 et 1300 °C
      - le dispositif comprend des éléments de basculement permettant de passer de la configuration dans laquelle les gaz des lignes d'injection haute et basse sont chauffés par les deux systèmes de réchauffeurs indépendants à une configuration dans laquelle les gaz des lignes d'injection haute et basse sont chauffés par un unique système de réchauffeurs.
      - les éléments de basculement comprennent une première vanne susceptible de mettre en relation les deux canalisations d'introduction de gaz dans les premier et deuxième systèmes de réchauffeurs et une deuxième vanne susceptible de mettre en relation les lignes d'injection haute et basse avant le point d'injection du gaz froid dans la ligne d'injection haute.
- le dispositif comporte sur l'une ou l'autre ou les deux lignes d'injection basse et haute des pertes de charges singulières permettant d'agir sur les débits de gaz des points d'injection bas et/ou haut.

L'invention sera mieux comprise à la lecture de la description qui suit, donnée en référence aux figures annexées sur lesquelles :
- la figure 1, déjà décrite, représente un dispositif connu de recyclage du gaz de gueulard ;
- la figure 2 représente un système de réchauffeurs constitué de trois cowpers ;
- la figure 3 représente schématiquement le procédé et le dispositif associé de l'invention, pour la configuration dans laquelle les gaz des lignes d'injection haute et basse sont chauffés par deux systèmes de réchauffeurs indépendants; et
- la figure 4 représente schématiquement le procédé et le dispositif utilisé pour la configuration dans laquelle les gaz des lignes d'injection haute et basse sont chauffés par un unique système de réchauffeurs, par exemple en cas de problème avec un des échangeurs thermiques.

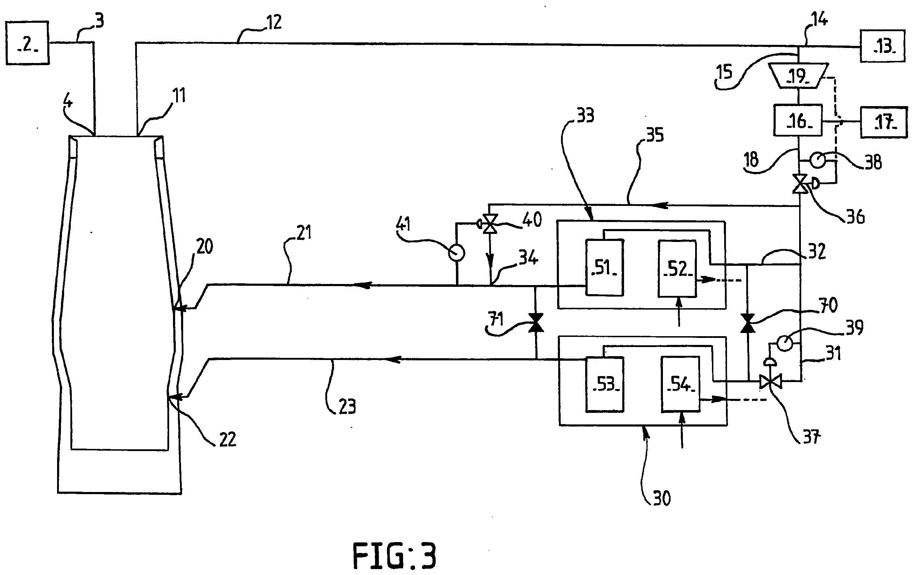

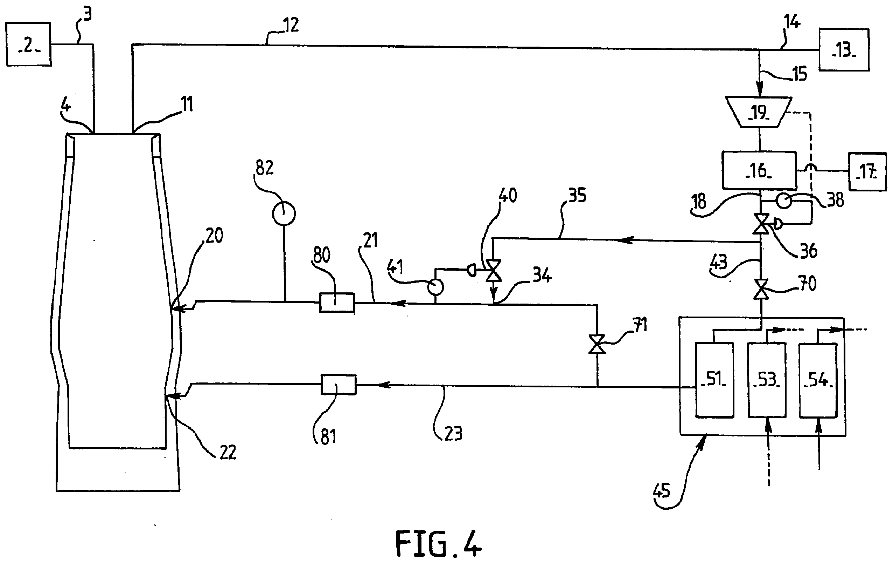

Les éléments communs des dispositifs des figures 1, 3 et 4 portent les mêmes références. Par souci de simplification, l'injection des combustibles auxiliaires et la récupération de la fonte et du laitier ne sont pas représentés sur les figures 3 et 4 mais sont bien évidemment des étapes présentes dans les procédés illustrés sur ces figures.

En référence à la figure 3, le haut fourneau 1 est alimenté en coke, en minerai de fer, en boulettes et en aggloméré 2 par la ligne 3 au point 4.

Les gaz de gueulard sont récupérés au point 11 de la partie supérieure du haut fourneau par l'intermédiaire de la ligne 12. Une partie de ces gaz de gueulard sont exportés 13 via la canalisation 14 dans un autre dispositif du site. L'autre partie est recyclée dans le haut fourneau par l'intermédiaire de la canalisation 15.

Cette partie des gaz de gueulard destinée à être recyclée est passe dans un compresseur 19 et est épurée en CO₂ par l'intermédiaire d'un épurateur de CO₂ 16 tel qu'une unité d'absorption aux amines, un VPSA, un PSA, ou l'un de ces dispositifs associé à une étape supplémentaire de cryogénie. Dans l'exemple de la figure 3, l'épurateur de CO₂ est un VPSA 16. Par ailleurs, le compresseur 19 peut être intégré au VPSA 16 ; il est représenté à part du VPSA par souci de clarté. Le CO₂ 17 est stocké dans le sous-sol après avoir subi des traitements appropriés si nécessaire.

Une partie du gaz riche en CO issu du VPSA 16 circule sur une ligne de transport principale 18 et est envoyée via une canalisation 31 vers un premier système de réchauffeurs 30 dans lequel il est chauffé à une température d'environ 1200°C. Le gaz chaud riche en CO issu de ce premier système de réchauffeurs 30 est injecté au point 22 dans la partie basse du haut fourneau au niveau des tuyères par l'intermédiaire d'une ligne d'injection basse 23.

Une autre partie du gaz riche en CO issu du VPSA 16 est envoyée via une canalisation 32 vers un deuxième système de réchauffeurs 33 dans lequel il est également chauffé à une température d'environ 1200°C. Le gaz chaud riche en CO issu de ce deuxième système de réchauffeurs est mélangé au point d'injection 34 avec du gaz riche en CO issu du VPSA qui est à une température proche de l'ambiante par l'intermédiaire d'une ligne d'alimentation en gaz froid 35.

Le mélange de ces deux gaz selon un mode de fonctionnement qui sera expliqué plus loin permet d'obtenir un gaz riche en CO à une température d'environ 900°C, qui est injecté au point 20 à proximité de l'angle cuve-ventre du haut-fourneau par l'intermédiaire d'une ligne d'injection haute 21.

Une première vanne de régulation 36 est située sur la ligne principale de transport du gaz épuré en CO₂ 18 avant la ligne d'injection de gaz froid 35. Cette vanne 36 est reliée à un système de mesure du débit de gaz 38 situé également sur la ligne principale de transport du gaz épuré en CO2 18 avant la ligne d'injection de gaz froid 35. On notera en variante, la possibilité de réguler le débit de la ligne principale du gaz épuré en CO2 18 au lieu et place de la vanne de régulation 36, par le compresseur 19 du VPSA 16 comme représenté en pointillés sur la figure 3.

Une deuxième vanne de régulation 37 est située sur la canalisation 31 à l'entrée du premier système de réchauffeurs 30. Cette vanne 37 est reliée à un système de mesure du débit de gaz 39 situé également sur cette canalisation 31.

Le dispositif de l'invention comporte également une vanne de régulation 40 située sur la ligne d'alimentation en gaz froid 35 qui permet d'ajuster le débit de gaz froid à injecter dans la ligne d'injection haute 21 selon la température des gaz de cette ligne qui est mesurée par un système approprié 41 et ce, afin que le gaz riche en CO qui est injecté à proximité de l'angle cuve-ventre du haut fourneau reste à une température relativement stable d'environ 900°C.

Les mesures des débits de gaz en sortie du VPSA 16 et à l'entrée du premier système de réchauffeurs 30 permettent d'ajuster les débits de gaz au niveau des points d'injection bas 22 et haut 20 dans le haut fourneau par l'intermédiaire des vannes 36 et 37.

Le contrôle des débits de gaz riche en CO en amont des systèmes de réchauffeurs et le contrôle du débit de gaz froid à injecter sur la ligne d'injection haute 21 permettent d'obtenir un système dans lequel les températures et les débits des gaz riches en CO injectés dans le haut fourneau sont relativement stables et contrôlés sans qu'il soit nécessaire d'utiliser des vannes de régulation sur les lignes d'injection haute 21 et basse 23 dans lesquelles circulent des gaz à des températures respectivement supérieures à 700°C et à 1000°C.

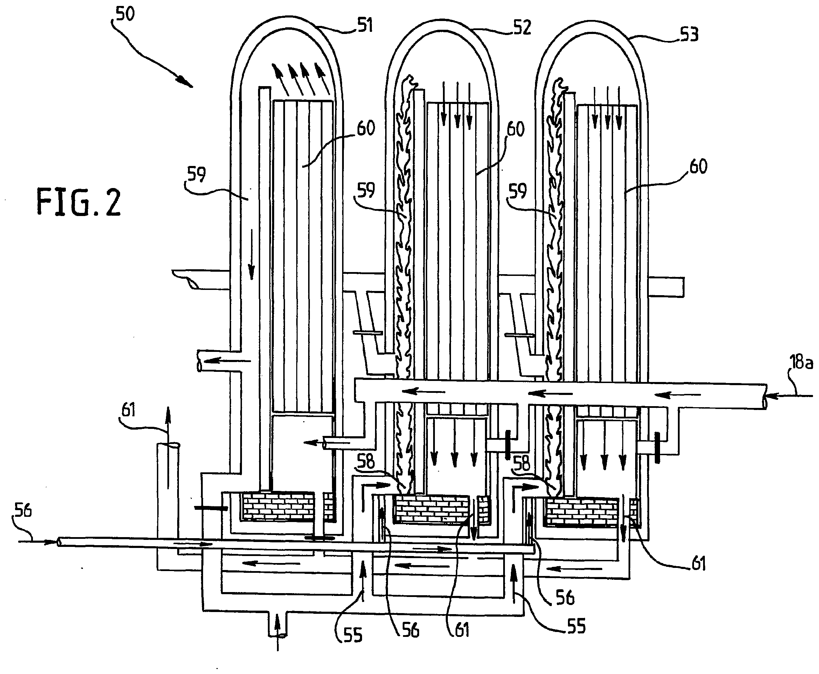

Les premier 30 et deuxième 33 systèmes de réchauffeurs du mode de réalisation de la figure 3 sont du type de celui représenté sur la figure 2. Le fonctionnement de ces systèmes de réchauffeurs est expliqué en référence avec cette figure 2.

Le système de réchauffeurs 50 de la figure 2 comporte trois échangeurs thermiques 51,52,53 dont deux sont représentés en mode d'accumulation de chaleur 52,53 et un en mode chauffage de gaz 51. Chacun de ces échangeurs est communément appelé cowper.

Chaque cowper 51,52,53 va alternativement occuper la fonction de chauffage de gaz alimentant la ligne d'injection considérée et la fonction d'accumulateur de chaleur.

Dans chacun des deux cowpers en mode d'accumulation de chaleur 52,53, un mélange de gaz de gueulard et de gaz d'aciérie et/ou de cokerie et/ou de tout autre gaz adapté au processus de chauffage de ces systèmes 55 ainsi que de l'air 56 sont amenés jusqu'à un bruleur 58 situé dans la partie inférieure des puits de combustion 59.

La combustion de ce mélange de gaz chauffe les briques de ruchage réfractaires constituant les parois du puits de ruchage 60 et les fumées 61 sont évacuées au niveau de la base du puits de ruchage 60 vers les cheminées.

Dans le cowper en mode de chauffage de gaz 51, les briques de ruchage du puits de ruchage 60 qui ont été préalablement chauffées selon le principe qui vient d'être décrit, vont chauffer le gaz riche en CO 18a qui est issu du VPSA 16 (figures 3 et 4) et amené via les canalisations 31 et/ou 32 à la base du puit de ruchage 60. Les briques vont se refroidir au fur et à mesure de la circulation de ce gaz riche en CO qui est évacué du cowper 51 à une température d'environ 1200 °C depuis le puits de combustion 59 vers la zone du haut fourneau au niveau de laquelle il est injecté.

Lorsque les briques ne sont plus assez chaudes et que la température du gaz de sortie est inférieure à 1200°C, le cowper 51 bascule dans sa fonction d'accumulateur de chaleur tandis que de façon concomitante, l'un des deux cowpers 52,53, par exemple le cowper 52, bascule vers un cycle de chauffage du gaz riche en CO. De la même façon, lorsque ce cowper 52 ne produit plus assez de chaleur, c'est le dernier cowper 53 qui assurera le chauffage du gaz pendant que le cowper 52 entrera de nouveau dans un cycle d'accumulation de chaleur.

Dans cette configuration à trois cowpers, si l'un des cowpers doit être arrêté, le système peut continuer à fonctionner à deux cowpers, le premier cowper chauffant le gaz, le deuxième étant en cycle de chauffe.

En revanche, dans le premier mode de réalisation présenté sur la figure 3, on prévoit que chacun des deux systèmes de réchauffeurs 30,33 ne comporte que deux cowpers respectivement 51,52 ; 53,54.

Cette configuration est avantageuse dans le cadre de l'invention. En effet, une installation comprenant deux systèmes de réchauffeurs de trois cowpers chacun serait très couteuse. Or un fonctionnement à deux systèmes de réchauffeurs indépendants est nécessaire pour pouvoir réguler les débits de gaz aux points d'injection bas 22 et haut 20.

C'est pourquoi il a été choisi un système à deux systèmes de réchauffeurs comportant chacun deux cowpers.

Cependant, selon ce système, si l'un des cowpers est hors d'état de fonctionnement, tout le système doit être interrompu puisque le système de réchauffeurs dont le cowper est défaillant, ne peut pas fonctionner avec seulement un seul cowper.

C'est pourquoi, l'invention prévoit des moyens permettant de faire basculer le système depuis son fonctionnement à deux systèmes de réchauffeurs à deux cowpers chacun figure 3, vers un système à un unique système de réchauffeurs à trois cowpers représenté sur la figure 4, en évitant ainsi l'arrêt total du haut fourneau à recyclage.

Pour basculer de la configuration à quatre cowpers, à la configuration à trois cowpers, une vanne 70 relie les canalisations 32 et 31 dans lesquelles circule le gaz riche en CO 18 issu de l'épurateur de CO₂ 16 vers les premier 30 et deuxième 33 systèmes de réchauffeurs. Cette vanne 70 est maintenue en position fermée tant que le système à quatre cowpers de la figure 3 fonctionne. Elle est commandée à l'ouverture si le système doit basculer vers un fonctionnement à trois cowpers tel que celui représenté sur la figure 4, en formant une canalisation unique 43 (figure 4) dans laquelle circule le gaz riche en CO 18 issu du VPSA 16 vers le système de réchauffeurs 45

Par ailleurs, une vanne 71 relie les lignes d'injection haute 21 et basse 23 à un niveau situé avant le point de mélange 34 par lequel le gaz froid 18 est injecté dans la ligne d'injection haute 21. En ouvrant cette vanne 71 et en condamnant les entrée et sortie du cowper qui ne fonctionne plus, les gaz circulant dans les lignes d'injection haute 21 et basse 23 sont tous chauffés par un unique système de réchauffeurs 45 à trois cowpers selon la configuration représentée sur la figure 4.

. Dans l'exemple représenté sur la figure, c'est le cowper 52 qui est en arrêt, le système de réchauffeurs 45 fonctionne ainsi avec les trois autres cowpers 51,53 et 54.

On décrit en référence à la figure 4 le fonctionnement du système à un système de réchauffeurs 45 comportant trois cowpers 51,53,54.

En sortie de ce système de réchauffeurs 45, les gaz sont à une température d'environ 1200 °C. Une partie de ce gaz est injecté au point 22 dans la partie basse du haut fourneau au niveau des tuyères par l'intermédiaire d'une ligne d'injection basse 23. L'autre partie est mélangée au point 34 avec du gaz riche en CO issu du VPSA 16 qui est à une température proche de l'ambiante par l'intermédiaire de la ligne d'alimentation en gaz froid 35. La régulation du débit de gaz froid se fait comme pour le mode de réalisation de la figure 3 avec la même vanne de régulation 40 et le système de mesure de température 41 du gaz de la ligne d'injection haute 21.

La régulation du débit d'entrée dans le système de réchauffeurs 45 s'effectue par la vanne de régulation 36 associée à son système de mesure de débit 38. La vanne de régulation 37 représentée sur la figure 3 n'exerce plus de rôle de régulation, c'est pourquoi elle n'est pas représentée sur la figure 4.

Dans cette configuration de la figure 4, il n'est pas possible de contrôler de façon indépendante le débit de gaz de la ligne d'alimentation haute 21 et le débit de gaz de la ligne d'alimentation basse 23

Pour pallier à cette incapacité, on peut utiliser des systèmes de pertes de charges singulières 80,81 disposés respectivement sur la ligne d'injection haute après le point de mélange 34 et sur la ligne d'injection basse 23 permettant, par leur géométrie de conception, de modifier les débits de gaz aux points respectifs d'injection bas 22 et haut 20 dans le haut-fourneau.

Par ailleurs, dans le système de la figure 4, il peut être nécessaire d'avoir à mesurer le débit de gaz circulant dans l'une ou l'autre ou les deux lignes d'injection basse 23 et haute 21 pour des raisons indépendantes de l'objet de l'invention. Une mesure de débit de ce type effectuée par un dispositif associé 82, par exemple sur la ligne d'injection haute 21, peut également aider au contrôle du débit des deux lignes d'injection 21,23 notamment en permettant de dimensionner les pertes de charges singulières 80,81 implantées sur les lignes respectives d'injection haute 21 et basse 23. On peut prévoir un seul dispositif de mesure du débit de gaz chaud 82 situé sur l'une ou l'autre des deux lignes d'injection basse 23 et haute 21 mais également un dispositif de mesure de débit situé sur chacune de ces deux lignes 21,23.

On notera que les systèmes de pertes de charges singulières 80,81 et le dispositif de mesure de débit de gaz chaud 82 étaient déjà présents sur le dispositif représenté sur la figure 3, bien que non représentés, étant entendu que ces systèmes 80,81,82 ne fonctionnent pas dans la cadre de l'invention dans la configuration à deux systèmes de réchauffeurs.

En tout état de cause, le procédé et le dispositif de l'invention permettent d'une part, de contrôler le débit et la température d'un gaz circulant dans deux niveaux d'injection à des températures supérieures à 700 °C à l'aide de deux systèmes de réchauffeurs indépendants 30,33 et d'autre part, d'assurer la sécurité du système en prévoyant un basculement vers une configuration dans laquelle certes, les débits de gaz des deux lignes d'injection ne sont plus contrôlées de façon indépendante, mais dans laquelle le haut fourneau peut néanmoins continuer à fonctionner.
Un aspect très avantageux de l'invention réside dans la simplicité de basculement entre la configuration à quatre cowpers (figure 3) et la configuration à trois cowpers (figure 4).

En effet, les vannes de régulation 40 et 36 sont utilisées dans les deux systèmes, sans qu'elles aient à être reconfigurées.

On pourrait en variante prévoir que la vanne 36 et sa mesure de débit associée 38 se trouvent sur la canalisation 32 à l'entrée du deuxième système de réchauffeurs 33. Dans ce cas, pour assurer la régulation des débits des lignes d'injection haute 21 et basse 23, une mesure supplémentaire de débit sur la ligne de gaz froid 35 sera prévue. Dans cette configuration, le basculement vers la configuration à un seul système de réchauffeurs 45 est plus compliqué car impliquant une reconfiguration de la vanne 36 ou 37 qui seront toutes deux utilisées en parallèle, en amont du système de réchauffeurs 45.

On pourrait encore prévoir en variante que la vanne 37 et sa mesure de débit associée 39 soient installées sur la canalisation 32 à l'entrée du deuxième système de réchauffeurs 33. Dans ce cas, pour assurer la régulation des débits des lignes d'injection haute 21 et basse 23, une mesure supplémentaire de débit sur la ligne de gaz froid 35 sera prévue.

En variante, on peut prévoir la présence d'un seul système de pertes de charges singulières positionné soit sur la ligne d'injection haute 21, soit sur la ligne d'injection basse 23.

On notera également que la température d'injection de 900°C du gaz à mi-hauteur du haut fourneau est un optimum dans une fourchette de 700 à 1000°C et que la température du gaz de la ligne d'injection basse présentée à 1200°C peut être comprise entre 1000 et 1300°C, température maximum du gaz en sortie des échangeurs thermiques.

Par ailleurs, la température du gaz au point d'injection haut 21 est entendue comme étant strictement inférieure à 1000°C et la température du gaz au point d'injection bas est entendue comme étant strictement supérieure à 1000°C.

## Revendications

1. Procédé de recyclage de gaz de haut-fourneau dans lequel au moins une partie des gaz issus du haut fourneau (1) subissent une étape d'épuration de CO₂ de façon à créer un gaz riche en CO (18) qui est réinjecté en un premier point d'injection haut (20) situé au-dessus de la base du haut-fourneau (1) à une température comprise entre 700 et 1000°C au niveau d'une ligne d'injection haute (21), et en un deuxième point d'injection bas (22) à la base du haut fourneau (1) à une température comprise entre 1000°C et 1300 °C au niveau d'une ligne d'injection basse (23), dans lequel les gaz des lignes d'injection basse (23) et haute (21) sont chauffés au moyen d'au moins un système de réchauffeurs (30,33 ; 45) desquels les gaz sortent à une température comprise entre 1000°C et 1300°C, **caractérisé en ce qu'**une partie du gaz riche en CO (18) en sortie de l'étape d'épuration est directement introduite dans la ligne d'injection haute (21) via une ligne d'injection en gaz froid (35) pour obtenir une température comprise entre 700 et 1000°C au premier point d'injection haut (20), **en ce qu'**on mesure la température au niveau de la ligne d'injection haute (21) et **en ce qu'**on ajuste, via des moyens de régulation (40), le débit de gaz froid à introduire dans cette ligne d'injection haute (21) selon la température mesurée précédemment, **en ce qu'**on effectue au moins une mesure du débit de gaz (38,39) en amont du système de réchauffeurs (30,33 ; 45) et **en ce que** l'on ajuste au moins le débit de gaz à introduire dans le système de réchauffeurs (30,33 ; 45) à partir des débits de gaz évalués précédemment via des moyens de régulation (36,37), ce dont il résulte un ajustement des débits de gaz au niveau des points d'injection bas (22) et haut (20).

2. Procédé selon la revendication 1, **caractérisé en ce que** les gaz des lignes d'injection haute (21) et basse (23) sont chauffés par deux systèmes de réchauffeurs indépendants (30,33), **en ce que** l'on effectue une mesure du débit de gaz (38) circulant sur la ligne principale de transport du gaz épuré en CO2 (18) avant la ligne d'injection de gaz froid (35), **en ce que** l'on effectue une mesure du débit de gaz (39) à l'entrée du système de réchauffeurs (30) de la ligne d'injection basse (23) et **en ce que** les débits de gaz à introduire respectivement dans les premier (33) et deuxième (30) systèmes de réchauffeurs sont ajustés à partir des débits de gaz évalués précédemment pour obtenir les débits de gaz visés au niveau des points respectifs d'injection bas (22) et haut (20).

3. Procédé selon la revendication 2, **caractérisé en ce que** la régulation des débits de gaz à introduire dans les premier (33) et deuxième (30) systèmes de réchauffeurs s'effectue d'une part en ajustant le débit de gaz sur la ligne principale de transport du gaz épuré en CO2 (18) avant la ligne d'injection de gaz froid (35) en agissant soit directement sur le débit de gaz de cette ligne, soit sur un compresseur (19) situé en amont de l'épurateur de CO₂ (16) dans lequel passe le gaz ou soit sur une turbine de détente éventuellement intégrée dans l'épurateur de CO₂ (16), et d'autre part en ajustant le débit de gaz à l'entrée du système de réchauffeurs de la ligne d'injection basse (30).

4. Procédé selon la revendication 2, **caractérisé en ce que** l'on bascule d'une configuration dans laquelle les gaz des lignes d'injection haute (21) et basse (23) sont chauffés par les deux systèmes de réchauffeurs indépendants (30,33) à une configuration dans laquelle les gaz des lignes d'injection haute (21) et basse (23) sont chauffés par un unique système de réchauffeur (45).

5. Procédé selon la revendication 4, **caractérisé en ce que** dans la configuration à un système de réchauffeurs (45), on mesure le débit de gaz circulant sur la ligne principale de transport du gaz épuré en CO2 (18) avant la ligne d'injection de gaz froid (35) et on ajuste le débit de gaz à introduire dans l'unique système de réchauffeur (45).

6. Procédé selon la revendication 5, **caractérisé en ce que** l'on mesure le débit de gaz qui circule dans l'une ou l'autre ou les deux lignes d'injection basse (23) et haute (21) de façon à évaluer le débit de gaz au niveau des points d'injection bas (22) et/ou haut (20) et **en ce que** les gaz de l'une ou l'autre ou des deux lignes d'injection basse (23) et haute (21) passent dans un système de pertes de charges singulières (80,81) de façon à agir, même sensiblement, sur les débits de gaz des points d'injection bas (22) et/ou haut (20).

7. Procédé selon l'une quelconque des revendications précédentes, dans lequel la température des gaz de la ligne d'injection basse (23) au niveau du point d'injection (22) dans la partie basse du haut fourneau est d'environ 1200°C, et dans lequel la température des gaz de la ligne d'injection haute (21) au niveau du point d'injection (20) à mi-hauteur du haut fourneau est d'environ 900°C.

8. Dispositif de recyclage de gaz de haut fourneau comportant :
- un épurateur de CO₂ (16) dans lequel circule au moins une partie des gaz issus du haut fourneau de façon à créer un gaz riche en CO,
- une ligne d'injection haute (21) par laquelle du gaz riche en CO (18) issu de l'épurateur (16) est injecté en un premier point d'injection haut (20) au dessus de la base du haut fourneau à une température comprise entre 700 et 1000°C,
- une ligne d'injection basse (23) par laquelle du gaz riche en CO (18) issu de l'épurateur (16) est injecté en un deuxième point d'injection bas (22) dans la partie basse du haut fourneau à une température comprise entre 1000 et 1300°C,
- deux systèmes de réchauffeurs (30,33) permettant de chauffer respectivement le gaz des lignes d'injection haute (21) et basse (23),
- une ligne d'alimentation en gaz froid de la ligne d'injection haute (21) par laquelle une partie du gaz riche en CO (18) en sortie de l'épurateur (16) est introduite dans la ligne d'injection haute (21) au niveau d'un point d'injection en gaz froid (34) pour l'obtention d'une température comprise entre 700 et 1000 °C au point d'injection haut (20) du haut-fourneau, et
- au moins un système de mesure de la température (41) au niveau de la ligne d'injection haute (21) ainsi que des moyens (40) pour ajuster le débit de gaz circulant dans la ligne d'injection en gaz froid (35) afin d'obtenir une température comprise entre 700 et 1000°C au premier point d'injection haut (20),
- un système de mesure du débit de gaz (38) circulant sur la ligne principale de transport du gaz épuré en CO2 (18) avant la ligne d'injection de gaz froid (35),
- un système de mesure du débit de gaz (39) à l'entrée du système de réchauffeurs (30) de la ligne d'injection basse (23),
- des moyens (36,37) pour ajuster les débits de gaz à introduire respectivement dans les premier (33) et deuxième (30) systèmes de réchauffeurs à partir des débits de gaz évalués précédemment pour obtenir les débits de gaz visés au niveau des points respectifs d'injection bas (22) et haut (20).

9. Dispositif selon la revendication 8, **caractérisé en ce que** le système permettant d'ajuster le débit de gaz au niveau de la ligne principale de transport du gaz épuré en CO₂ (18) avant la ligne d'injection de gaz froid (35) est soit une vanne de régulation, soit un compresseur situé en amont dans lequel circule le gaz.

10. Dispositif selon l'une quelconque des revendications 8 et 9, **caractérisé en ce que** les systèmes de réchauffeurs (30,33) sont des échangeurs thermiques comportant chacun un système de chauffage du gaz (51,52,53,54) et un système d'accumulation de chaleur (51,52,53,54), chacun de ces systèmes (51,52,53,54) pouvant basculer de la fonction d'accumulateur de chaleur à la fonction de chauffage de gaz et réciproquement, de façon à maintenir la température du gaz en sortie du système de réchauffeurs relativement stable à une température comprise entre 1000 et 1300 °C.

11. Dispositif selon l'une quelconque des revendications 8 à 10, **caractérisé en ce qu'**il comprend des éléments de basculement (70,71,) permettant de passer de la configuration dans laquelle les gaz des lignes d'injection haute (21) et basse (23) sont chauffés par les deux systèmes de réchauffeurs indépendants (30,33) à une configuration dans laquelle les gaz des lignes d'injection haute (21) et basse (23) sont chauffés par un unique système de réchauffeurs (45).

12. Dispositif selon la revendication 11, **caractérisé en ce que** les éléments de basculement (70) comprennent une première vanne (70) susceptible de mettre en relation les deux canalisations d'introduction de gaz (31,32) dans les premier (30) et deuxième (33) systèmes de réchauffeurs et une deuxième vanne (71) susceptible de mettre en relation les lignes d'injection haute (21) et basse (23) avant le point d'injection (34) du gaz froid dans la ligne d'injection haute (21).

13. Dispositif selon la revendication 12 **caractérisé en ce qu'**il comporte sur l'une ou l'autre ou les deux lignes d'injection basse (23) et haute (21) des pertes de charges singulières permettant d'agir sur les débits de gaz des points d'injection bas (22) et/ou haut (20).

## Patentansprüche

1. Verfahren zur Rückführung von Gasen eines Hochofens, bei dem mindestens ein Teil der aus dem Hochofen (1) stammenden Gase einem Schritt der CO₂-Reinigung unterworfen wird, um ein Gas (18) reich an CO zu erzeugen, das an einem ersten oberen Injektionspunkt (20), der oberhalb des Basisbereichs des Hochofens (1) liegt, bei einer Temperatur an einer oberen Injektionsleitung (21) zwischen 700 und 1000°C und an einem zweiten unteren Injektionspunkt (22) am Basisbereich des Hochofens (1) bei einer Temperatur an einer unteren Injektionsleitung (23) zwischen 1000°C und 1300°C wieder eingeführt wird, wobei die Gase der unteren (23) und oberen (21) Injektionsleitung mittels mindestens eines Systems (30, 33; 45) von Vorwärmern aufgeheizt werden, von denen die Gase bei einer Temperatur zwischen 1000°C und 1300°C austreten, **dadurch gekennzeichnet, dass** ein Teil des Gases (18) reich an CO am Ausgang des Reinigungsschrittes direkt in die obere Injektionsleitung (21) über eine Injektionsleitung (35) für kaltes Gas eingeführt wird, um eine Temperatur zwischen 700 und 1000°C am ersten oberen Injektionspunkt (20) zu erhalten, dass die Temperatur an der oberen Injektionsleitung (21) gemessen wird, und dass der Durchsatz des in die obere Injektionsleitung (21) einzuführende kalte Gas über Einstellmittel (40) gemäß der vorher gemessenen Temperatur eingestellt wird, dass mindestens eine Messung des Gasdurchsatzes (38, 39) stromaufwärts zum Vorwärmersystem (30, 33; 45) durchgeführt wird und dass mindestens der in das Vorwärmersystem (30, 33; 45) einzuführende Gasdurchsatz aus den vorher evaluierten Gasdurchsätzen über die Einstellmittel (36, 37) eingestellt wird, woraus eine Einstellung der Gasdurchsätze an dem unteren (22) und oberen (20) Injektionspunkt resultiert.

2. Verfahren nach Anspruch 1, **dadurch gekennzeichnet, dass** die Gase der oberen (21) und unteren (23) Injektionsleitung von zwei unabhängigen Vorwärmersystemen (30, 33) aufgeheizt werden, dass eine Messung des Durchsatzes (38) des Gases, das über die Hauptleitung der Förderung des CO₂ gereinigten Gases (18) zirkuliert, vor der Injektionsleitung (35) für kaltes Gas durchgeführt wird, dass eine Messung des Gasdurchsatzes (39) am Eintritt des Vorwärmersystems (30) der unteren Injektionsleitung (23) durchgeführt wird, und dass die jeweils in das erste (33) und zweite (30) einzuführenden Gasdurchsätze aus den zuvor evaluierten Gasdurchsätzen eingestellt werden, um die an dem jeweiligen unteren (22) und oberen (20) Injektionspunkt angestrebten Gasdurchsätze zu erhalten.

3. Verfahren nach Anspruch 2, **dadurch gekennzeichnet, dass** die Einstellung der in das erste (33) und zweite Vorwärmersystem einzuführenden Gasdurchsätze einerseits dadurch durchgeführt wird, dass der Gasdurchsatz über die Hauptleitung (18) der Förderung des CO₂ gereinigten Gases vor der Injektionsleitung (35) für kaltes Gas eingestellt wird, indem, sei es direkt auf den Gasdurchsatz dieser Leitung, sei es auf einen Kompressor (19), der stromaufwärts zu der CO₂-Reinigungsvorrichtung (16) liegt, durch die das Gas hindurchgeht, oder sei es auf eine Entspannungsturbine, die gegebenenfalls in die CO₂-Reinigungsvorrichtung (16) integriert ist, eingewirkt wird und andererseits dadurch, dass der Gaszusatz am Eintritt des Vorwärmersystems der unteren Injektionsleitung (30) eingestellt wird.

4. Verfahren nach Anspruch 2, **dadurch gekennzeichnet, dass** zwischen einer Konfiguration, in der die Gase der oberen (21) und unteren (23) Injektionsleitung durch die zwei unabhängigen Vorwärmersysteme (30, 33) aufgeheizt werden, und einer Konfiguration, in der die Gase der oberen (21) und unteren (23) Injektionsleitung durch ein einziges Vorwärmersystem (45) aufgeheizt werden, umgeschaltet wird.

5. Verfahren nach Anspruch 4, **dadurch gekennzeichnet, dass** in der Konfiguration mit einem Vorwärmersystem (45) der in der Hauptleitung (18) der Förderung des CO₂ gereinigten Gases zirkulierende Gasdurchsatz vor der Injektionsleitung (35) des kalten Gases gemessen wird und der in das einzige Vorwärmersystem (45) einzuführende Gasdurchsatz eingestellt wird.

6. Verfahren nach Anspruch 5, **dadurch gekennzeichnet, dass** der Durchsatz des Gases, das in der einen oder der anderen oder in beiden der unteren (23) und oberen (21) Injektionsleitungen zirkuliert, gemessen wird, derart, dass der Gasdurchsatz an dem unteren (22) und/oder oberen (20) Injektionspunkt evaluiert wird, und dass die Gase der einen oder der anderen oder sowohl der unteren (23) als auch oberen (21) Injektionsleitung in ein System (80, 81) von singulären Druckverlusten gelangen, um so, sogar deutlich, auf die Gasdurchsätze des unteren (22) und/oder oberen (20) Injektionspunktes einzuwirken.

7. Verfahren nach einem beliebigen der vorhergehenden Ansprüche, bei dem die Temperatur der Gase der unteren Injektionsleitung (23) an dem Injektionspunkt (22) in dem unteren Teil des Hochofens ungefähr 1200°C beträgt und bei dem die Temperatur der Gase der oberen Injektionsleitung (21) an dem Injektionspunkt (20) auf halber Höhe des Hochofens ungefähr 900°C trägt.

8. Vorrichtung zur Rückführung von Gasen eines Hochofens, umfassend:
- eine CO₂-Reinigungsvorrichtung (16), in der mindestens ein Teil des von dem Hochofen abgegebenen Gases zirkuliert, um ein Gas reich an CO zu erzeugen,
- eine obere Injektionsleitung (21), über die das von der Reinigungsvorrichtung (16) stammende Gas reich an CO (18) an einem ersten oberen Injektionspunkt (20) oberhalb des Basisbereichs des Hochofens bei einer Temperatur zwischen 700 und 1000°C injiziert wird,
- eine untere Injektionsleitung (23), über die von der Reinigungsvorrichtung (16) stammendes Gas reich an CO (18) an einem zweiten unteren Injektionspunkt (22) in dem unteren Bereich des Hochofens bei einer Temperatur zwischen 1000 und 1300°C eingeführt wird,
- zwei Vorwärmersysteme (30, 33), die ein Aufheizen des Gases jeweils der oberen (21) und unteren (23) Injektionsleitung gestatten,
- eine Leitung zur Versorgung der oberen Injektionsleitung (21) mit kaltem Gas, über die ein Teil des Gases reich an CO (18) am Ausgang der Reinigungsvorrichtung (16) in die obere Injektionsleitung (21) an einen Injektionspunkt (34) für kaltes Gas zum Erhalten einer Temperatur zwischen 700 und 1000°C am oberen Einspritzpunkt (20) des Hochofens eingeführt wird, und
- mindestens ein System (41) zum Messen der Temperatur an der oberen Injektionsleitung (21) sowie Mittel (40) zum Einstellen des Durchsatzes des in der Injektionsleitung (35) für kaltes Gas zirkulierenden Gases einzustellen, damit eine Temperatur zwischen 700 und 1000°C am ersten oberen Einspritzpunkt (20) erhalten wird,
- ein System (38) zur Messung des Durchsatzes des Gases, das über die Hauptleitung (18) zur Förderung des CO₂ gereinigten Gases vor der Injektionsleitung (35) für kaltes Gas zirkuliert,
- ein System (39) zur Messung des Gasdurchsatzes am Eintritt des Vorwärmersystems (30) der unteren Injektionsleitung (23),
- Mittel (36, 37) zum Einstellen der jeweils in das erste (33) und zweite (30) Vorwärmersystem einzuführenden Gasdurchsätze aus den zuvor evaluierten Gasdurchsätzen, um an dem jeweiligen unteren (22) und oberen (20) Injektionspunkt die erstrebten Gasdurchsätze zu erhalten.

9. Vorrichtung nach Anspruch 8, **dadurch gekennzeichnet, dass** das System, das die Einstellung des Gasdurchsatzes in der Hauptleitung (18) zur Förderung des CO₂ gereinigten Gases vor der Injektionsleitung (35) für kaltes Gas gestattet, entweder ein Einstellventil oder ein stromaufwärts liegender Kompressor ist, in dem das Gas zirkuliert.

10. Vorrichtung nach einem beliebigen der Ansprüche 8 und 9, **dadurch gekennzeichnet, dass** die Vorwärmersysteme (30, 33) Wärmetauscher sind, die jeweils ein System (51, 52, 53, 54) zum Aufheizen des Gases und ein System (51, 52, 53, 54) zum Speichern von Wärme aufweisen, wobei jedes dieser Systeme (51, 52, 53, 54) von der Funktion des Speicherns von Wärme auf die Funktion des Aufheizens des Gases umschalten kann und umgekehrt, um die Temperatur des Gases am Ausgang des Vorwärmersystems relativ stabil bei einer Temperatur zwischen 1000 und 1300°C aufrechtzuerhalten.

11. Vorrichtung nach einem beliebigen der Ansprüche 8 bis 10, **dadurch gekennzeichnet, dass** sie Umschaltelemente (70, 71) umfasst, die gestatten, von der Konfiguration, in der die Gase der oberen (21) und unteren (23) Injektionsleitung durch zwei unabhängige Vorwärmersysteme (30, 33) aufgeheizt werden, auf eine Konfiguration überzugehen, in der die Gase der oberen (21) und unteren (23) Injektionsleitung durch ein einziges Vorwärmersystem (45) aufgeheizt werden.

12. Vorrichtung nach Anspruch 11, **dadurch gekennzeichnet, dass** die Umschaltelemente (70) ein erstes Ventil (70), das geeignet ist, die zwei Leitungen (31, 32) zur Einführung des Gases in das erste (30) und das zweite (33) Vorwärmersystem in Beziehung zu setzen, und ein zweites Ventil (71) umfassen, das geeignet ist, die obere (21) und untere (23) Injektionsleitung vor dem Injektionspunkt (34) des kalten Gases in die obere Injektionsleitung (21) in Beziehung zu setzen.

13. Vorrichtung nach Anspruch 12, **dadurch gekennzeichnet, dass** sie auf der einen oder anderen oder der unteren (23) und oberen (21) Injektionsleitung singuläre Druckverluste aufweist, die gestatten, auf die Gasdurchsätze des unteren (22) und/oder oberen (20) Injektionspunktes einzuwirken.

## Claims

1. Method of recirculating blast furnace gas, wherein at least a portion of the gases coming from the blast furnace (1) is subjected to a CO₂ purification step so as to create a CO-rich gas (18) which is re-injected at a first, top injection point (20) situated above the base of the blast furnace (1) at a temperature between 700 and 1000°C at the level of a top injection line (21), and at a second, bottom injection point (22) at the base of the blast furnace (1) at a temperature between 1000°C and 1300°C at the level of a bottom injection line (23), wherein the gases of the bottom injection line (23) and of the top injection line (21) are heated by means of at least one heater system (30, 33; 45) from which the gases leave at a temperature between 1000°C and 1300°C, **characterised in that** a portion of the CO-rich gas (18) leaving the purification step is introduced directly into the top injection line (21) *via* a cold gas injection line (35) in order to obtain a temperature between 700 and 1000°C at the first, top injection point (20), **in that** the temperature is measured at the level of the top injection line (21), and **in that** the flow rate of cold gas to be introduced into the top injection line (21) is adjusted, *via* regulating means (40), according to the temperature measured previously, **in that** at least one gas flow rate measurement (38, 39) is carried out upstream of the heater system (30, 33; 45), and **in that** at least the flow rate of gas to be introduced into the heater system (30, 33; 45) is adjusted *via* regulating means (36, 37) on the basis of the gas flow rates evaluated previously, from which there results an adjustment of the gas flow rates at the level of the bottom injection point (22) and the top injection point (20).

2. Method according to claim 1, **characterised in that** the gases of the top injection line (21) and of the bottom injection line (23) are heated by two independent heater systems (30, 33), **in that** a measurement of the flow rate of gas (38) circulating in the main line for transporting the gas purified of CO₂ (18) is carried out before the cold gas injection line (35), **in that** a measurement of the flow rate of gas (39) is carried out at the inlet of the heater system (30) of the bottom injection line (23), and **in that** the flow rates of gas to be introduced into the first heater system (33) and the second heater system (30) are adjusted on the basis of the gas flow rates evaluated previously in order to obtain the target gas flow rates at the level of the bottom injection point (22) and the top injection point (20).

3. Method according to claim 2, **characterised in that** the flow rates of gas to be introduced into the first heater system (33) and the second heater system (30) are regulated on the one hand by adjusting the gas flow rate in the main line for transporting the gas purified of CO₂ (18) before the cold gas injection line (35) by acting either directly on the gas flow rate **in that** line or on a compressor (19) situated upstream of the CO₂ purifier (16) into which the gas passes or on an expansion turbine optionally integrated into the CO₂ purifier (16), and on the other hand by adjusting the gas flow rate at the inlet of the heater system of the bottom injection line (30).

4. Method according to claim 2, **characterised in that** a switch is made from a configuration in which the gases of the top injection line (21) and the bottom injection line (23) are heated by the two independent heater systems (30, 33) to a configuration in which the gases of the top injection line (21) and the bottom injection line (23) are heated by a single heater system (45).

5. Method according to claim 4, **characterised in that**, in the configuration with one heater system (45), the flow rate of gas circulating in the main line for transporting the gas purified of CO₂ (18) is measured before the cold gas injection line (35), and the flow rate of gas to be introduced into the single heater system (45) is adjusted.

6. Method according to claim 5, **characterised in that** the flow rate of gas circulating in one or the other or in both of the bottom injection line (23) and the top injection line (21) is measured so as to evaluate the gas flow rate at the level of the bottom injection point (22) and/or the top injection point (20), and **in that** the gases of one or the other or of both of the bottom injection line (23) and the top injection line (21) pass into a singular pressure loss system (80, 81) so as to act, even substantially, on the gas flow rates of the bottom injection point (22) and/or the top injection point (20).

7. Method according to any one of the preceding claims, wherein the temperature of the gases in the bottom injection line (23) at the level of injection point (22) in the bottom portion of the blast furnace is approximately 1200°C, and wherein the temperature of the gases in the top injection line (21) at the level of injection point (20) at half height of the blast furnace is approximately 900°C.

8. Device for recirculating blast furnace gas, comprising:
- a CO₂ purifier (16) in which there circulates at least a portion of the gases coming from the blast furnace, so as to create a CO-rich gas,
- a top injection line (21) through which CO-rich gas (18) coming from the purifier (16) is injected at a first, top injection point (20) above the base of the blast furnace at a temperature between 700 and 1000°C,
- a bottom injection line (23) through which CO-rich gas (18) coming from the purifier (16) is injected at a second, bottom injection point (22) in the bottom portion of the blast furnace at a temperature between 1000 and 1300°C,
- two heater systems (30, 33) allowing the gases of the top injection line (21) and of the bottom injection line (23), respectively, to be heated,
- a line for supplying cold gas to the top injection line (21) through which a portion of the CO-rich gas (18) leaving the purifier (16) is introduced into the top injection line (21) at the level of a cold gas injection point (34) in order to obtain a temperature between 700 and 1000°C at the top injection point (20) of the blast furnace, and
- at least one system for measuring the temperature (41) at the level of the top injection line (21) as well as means (40) for adjusting the flow rate of gas circulating in the cold gas injection line (35) so as to obtain a temperature between 700 and 1000°C at the first, top injection point (20),
- a system for measuring the flow rate of gas (38) circulating in the main line for transporting the gas purified of CO₂ (18) before the cold gas injection line (35),
- a system for measuring the gas flow rate (39) at the inlet of the heater system (30) of the bottom injection line (23),
- means (36, 37) for adjusting the flow rates of gas to be introduced into the first heater system (33) and the second heater system (30), respectively, on the basis of the gas flow rates evaluated previously, in order to obtain the target gas flow rates at the level of the bottom injection point (22) and the top injection point (20).

9. Device according to claim 8, **characterised in that** the system allowing the gas flow rate at the level of the main line for transporting the gas purified of CO₂ (18) to be adjusted before the cold gas injection line (35) is either a regulating valve or a compressor situated upstream into which the gas circulates.

10. Device according to any one of claims 8 and 9, **characterised in that** the heater systems (30, 33) are heat exchangers each comprising a gas heating system (51, 52, 53, 54) and a heat storage system (51, 52, 53, 54), each of the systems (51, 52, 53, 54) being able to switch from the heat storage function to the gas heating function and *vice versa* so as to keep the temperature of the gas leaving the heater system relatively stable at a temperature between 1000 and 1300°C.

11. Device according to any one of claims 8 to 10, **characterised in that** it comprises switching elements (70, 71) which permit switching from the configuration in which the gases of the top injection line (21) and of the bottom injection line (23) are heated by the two independent heater systems (30, 33) to a configuration in which the gases of the top injection line (21) and of the bottom injection line (23) are heated by a single heater system (45).

12. Device according to claim 11, **characterised in that** the switching elements (70) comprise a first valve (70) capable of connecting the two gas introduction pipes (31, 32) in the first heater system (30) and the second heater system (33) and a second valve (71) capable of connecting the top injection line (21) and the bottom injection line (23) before the injection point (34) of cold gas into the top injection line (21).

13. Device according to claim 12, **characterised in that** it comprises on one or the other or on both of the bottom injection line (23) and the top injection line (21) singular pressure losses making it possible to act on the gas flow rates of the bottom injection point (22) and/or of the top injection point (20).
